# EUROPEAN PATENT APPLICATION

(11) **EP 3 950 344 A1**
(43) Date of publication of application: **09.02.2022**
(21) Application number: 20777469.6
(22) Date of filing: 24.03.2020
(51) Int. Cl.: B32B 27/28, B65D 65/40

(54) **MULTILAYER STRUCTURE, AND PACKAGING BODY**

(30) Priority: 26.03.2019 JP 2019059254
(71) Applicant: Mitsubishi Chemical Corporation, Chiyoda-ku Tokyo 100-8251 (JP)
(72) Inventor: NAKANISHI Shinji, Tokyo 100-8251 (JP)
(74) Representative: Kuhnen & Wacker Patent- und Rechtsanwaltsbüro PartG mbB
(86) International application number: PCT/JP2020/013173
(87) International publication number: WO 2020/196568

(57) **Abstract**

The present invention relates to a multilayer structure used in a treatment under a high pressure of 100 MPa or more including, an ethyl ene-vinyl alcohol-based copolymer layer, a heat sealing resin layer, and an adhesive resin layer, in which the ethylene-vinyl alcohol-based copolymer layer contains a sodium ion, and a content of the sodium ion in the ethylene-vinyl alcohol-based copolymer layer is 10 ppm to 500 ppm.

## Description

### TECHNICAL FIELD

The present invention relates to a multilayer structure and a package.

### BACKGROUND ART

As a technique for storing food or the like for a long period of time, there has been known a method in which food or the like is packed in a package and sterilized. As a sterilization treatment method, a heat sterilization method typified by retort sterilization has been the most common in the past, but in recent years, a high pressure treatment method is also known.

The high pressure treatment method is, for example, a method in which food or the like is put into a package, and the package is sterilized by being pressurized with water having a hydrostatic pressure of 100 MPa or more and 100°C or less. The high pressure treatment method has an advantage that the flavor, color, and nutrition of food or the like are less likely to be lost as compared with the heat sterilization method. Since the protein is denatured by the high pressure treatment method, the high pressure treatment method is also used as a food processing technique.

As a structure constituting a package used in the high pressure treatment method, for example, Patent Literature 1 discloses a packaging material in which a hydrophobic layer is laminated on at least one of saponified ethylene-vinyl acetate copolymer layers.

However, when food or the like is subjected to a high pressure treatment, a similar pressure is applied to the package. In a package of related art such as a package using the packaging material described in Patent Literature 1, there is a problem that the package is partially whitened due to the pressure during the high pressure treatment.

As a technique for solving the problem of whitening, for example, Patent Literature 2 discloses a multilayer structure for a high pressure treatment used in a treatment under a high pressure of 100 MPa or more, in which a ratio of upper yield point stress to lower yield point stress in a tensile test with respect to a flow direction (MD) of a film at a test speed of 200 mm/min: upper yield point stress/lower yield point stress is 1.3 or less.

### CITATION LIST

### PATENT LITERATURE

Patent Literature 1: JP-A-H3-290175
Patent Literature 2: JP-A-2018-058298

### SUMMARY OF INVENTION

### TECHNICAL PROBLEM

However, when a package using the structure described in Patent Literature 2 is subjected to a high pressure treatment, delamination (interlayer delamination) may occur in the package. It is presumed that this is due to a difference in compression ratio between adjacent layers (e.g., an ethylene-vinyl alcohol-based copolymer layer and an adhesive resin layer).

Therefore, an object of the present invention is to provide a multilayer structure in which delamination does not occur even when a sterilization treatment is performed under a high pressure of 100 MPa or more. Another object of the present invention is to provide a package having the multilayer structure.

### SOLUTION TO PROBLEM

As a result of intensive studies to solve the above problems, the present inventors have found that the above problems can be solved by providing a multilayer structure having an ethylene-vinyl alcohol-based copolymer layer containing a sodium ion, and have completed the present invention.

That is, the gist of the present invention is (1) to (3) below.
(1) A multilayer structure used in a treatment under a high pressure of 100MPa or more, the multilayer structure including:
   an ethylene-vinyl alcohol-based copolymer layer;
   a heat sealing resin layer; and
   an adhesive resin layer, wherein
   the ethylene-vinyl alcohol-based copolymer layer contains a sodium ion, and
   a content of the sodium ion in the ethylene-vinyl alcohol-based copolymer layer is 10 ppm to 500 ppm.
(2) The multilayer structure according to (1), wherein the multilayer structure has a thickness of 20 µm to 1000 µm.
(3) A package including the multilayer structure according to (1) or (2).

### ADVANTAGEOUS EFFECTS OF INVENTION

In a multilayer structure according to the present invention, delamination does not occur even when a sterilization treatment is performed under a high pressure of 100 MPa or more. In a package using the multilayer structure, even when the sterilization treatment is performed under a high pressure of 100 MPa or more, delamination property is low, and freshness of food or the like can be maintained.

### BRIEF DESCRIPTION OF DRAWINGS

[Fig. 1] Fig. 1 is a schematic cross-sectional view showing a configuration of a multilayer structure according to an embodiment of the present invention.
[Fig. 2] Fig. 2 is an overall perspective view showing an example of a stand-up pouch suitably used as a package according to the present invention.

### DESCRIPTION OF EMBODIMENTS

Hereinafter, the present invention will be described in detail, but these show examples of desirable embodiments, and the present invention is not specified in these contents.

In the present invention, a side on which contents of a stand-up pouch is stored, that is, a heat sealing side is referred to as "inner side", and the reverse side is referred to as "outer side".

In the following explanations, terms such as "upper", "lower", "left-hand", and "right-hand" are terms used for convenience in accordance with the directions in a drawing.

In general, the term "film" means a thin flat product which has an extremely small thickness as compared with the length and width thereof and has an optional limited maximum thickness and which is supplied usually in the form of a roll, while the term "sheet" means a flat product generally having a small thickness for the length and width thereof (Japanese Industrial Standards JIS K6900). However, there is no clear boundary between the sheet and the film. In the present invention, since there is no need of distinguishing the two materials by word, any material called a "film" may include the meaning of a "sheet" and any material called a "sheet" may include the meaning of a "film".

Further, in the present invention, ppm is based on mass.

### [Multilayer Structure]

A multilayer structure according to the present invention is a multilayer structure used in a treatment under a high pressure of 100 MPa or more, and includes at least an ethylene-vinyl alcohol-based copolymer (hereinafter, may be referred to as "EVOH") layer, a heat sealing resin layer, and an adhesive resin layer.

Each layer will be described below.

### <EVOH Layer>

The EVOH layer is a layer made of an EVOH resin composition. The EVOH resin composition contains EVOH and a sodium ion.

When the EVOH resin composition contains a sodium ion, the sodium ion acts as a catalyst on a hydroxyl group portion of the EVOH resin composition, and thus, for example, the bond strength between the EVOH resin composition and maleic anhydride contained in the adhesive resin layer is improved. The improvement of the bond strength is achieved by ring-opening of maleic anhydride by the action of the sodium ion as a catalyst.

Therefore, when the EVOH resin composition contains a sodium ion, the adhesive strength between the EVOH layer and the adhesive resin layer is improved, and thus delamination can be prevented even when there is a difference in compression ratio between the EVOH layer and the adhesive resin layer.

On the other hand, at the time of treatment under a high pressure, a polymer is compressed, and volume shrinkage occurs in all layers of the multilayer structure. Therefore, delamination occurs at an interface portion between the EVOH layer and the adhesive resin layer, which is a portion having the weakest adhesive strength. It is considered that when the pressure is removed from the interface portion, air accumulated in the interface portion expands to cause whitening or delamination.

When the EVOH resin composition contains a sodium ion, the thermal stability changes, but when the sodium ion is not uniformly dispersed in the EVOH resin composition, the sodium ion may become a retained substance at the time of melt molding.

Here, a product material used in the multilayer structure is characterized by keeping the raw color and raw flavor of the contents as they are. In order for a customer to select and purchase a fresher content, an appearance of a package is required to have high transparency, the appearance of the product material is required to have a higher level of low foreign matter properties, and defects in the appearance of the product material cause a serious problem.

Therefore, a person skilled in the art does not usually use an EVOH layer containing a sodium ion as the EVOH layer used in the multilayer structure.

### (EVOH)

The EVOH is usually a resin obtained by saponifying a copolymer of ethylene and a vinyl ester-based monomer (ethylene-vinyl ester-based copolymer), and is a water-insoluble thermoplastic resin. The polymerization method may be conducted using any known polymerization method such as, for example, solution polymerization, suspension polymerization, or emulsion polymerization. In general, however, solution polymerization is used in which a lower alcohol such as methanol is used as the solvent. Saponification of the ethylene-vinyl ester-based copolymer obtained can also be performed by a known method. The EVOH thus produced includes, as main structural units, structural units derived from ethylene and vinyl-alcohol structural units, and includes a slight amount of vinyl-ester structural units remaining unsaponified.

Vinyl acetate is representatively used as the vinyl ester-based monomer from the standpoints of availability on the market and the satisfactory efficiency of treatment for impurity removal during the production. Examples of other vinyl ester-based monomers include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate and aromatic vinyl esters such as vinyl benzoate. Aliphatic vinyl esters each having usually 3 to 20 carbon atoms, preferably 4 to 10 carbon atoms, and particularly preferably 4 to 7 carbon atoms, can be used. One of these is usually used alone, and two or more thereof may be simultaneously used as needed.

The ethylene content of the EVOH, in terms of the value determined in accordance with ISO 14663, is preferably 20 mol% to 60 mol%, more preferably 25 mol% to 50 mol%, and particularly preferably 25 mol% to 35 mol%. When the content is too low, the EVOH tends to have a reduced gas barrier property under high humidity and reduced melt moldability. Conversely, when the content is too high, the gas barrier property tends to decease.

The degree of saponification of the vinyl ester component in the EVOH, in terms of the value determined in accordance with JIS K6726 (the EVOH is examined as an uniform solution in water/methanol solvent), is preferably 90 mol% to 100 mol%, more preferably 95 mol% to 100 mol%, and particularly preferably 99 mol% to 100 mol%. When the degree of saponification is too low, the gas barrier property, thermal stability, moisture stability, etc. tend to decrease.

In addition, the melt flow rate (MFR) of the EVOH (210°C, load: 2,160 g) is preferably 0.5 g/10 min to 100 g/10 min, more preferably 1 g/10 min to 50 g/10 min, and particularly preferably 3 g/10 min to 35 g/10 min. When the MFR is too high, the EVOH tends to have a reduced film-forming property. When the MFR is too low, the EVOH tends to have a too high melt viscosity and be difficult to melt-extrude.

The EVOH may further include structural units derived from the comonomer shown below, in addition to the ethylene structural units and the vinyl-alcohol structural units (including unsaponified vinyl-ester structural units). Examples of the comonomer include: α-olefins such as propylene, isobutene, α-octene, α-dodecene, and α-octadecene; hydroxy group-containing α-olefins such as 3-butene-1-ol, 4-pentene-1-ol, and 3-butene-1,2-diol and derivatives of hydroxy-containing α-olefins, such as esterified products and acylated products of those hydroxy-containing α-olefins; unsaturated carboxylic acids or salts, partial alkyl esters, complete alkyl esters, nitriles, amides or anhydrides thereof; unsaturated sulfonic acids or salts thereof; vinylsilane compounds; vinyl chloride; and styrene.

Further, an EVOH which has undergone an "after modification" such as urethane formation, acetalization, cyanoethylation, or oxyalkylene formation can be used.

Preferred of the modifications shown above are EVOHs having primary hydroxy groups which have been incorporated into the side chain by copolymerization, since these EVOHs have satisfactory formability in stretching, vacuum/air-pressure forming, etc. Preferred of these is an EVOH having 1,2-diol structures in side chains.

The EVOH may be a mixture thereof with a different EVOH. Examples of the different EVOH include one which differs in ethylene content, one which differs in degree of saponification, one which differs in melt flow rate (MFR) (210°C, load: 2,160 g), one which differs in other comonomer ingredients, and one which differs in modification amount (e.g., one which differs in content of 1,2-diol structural units).

The content of the EVOH in the EVOH resin composition is preferably 70 mass% or more, more preferably 80 mass% or more, and particularly preferably 90 mass% or more, from the viewpoint of gas barrier property.

### (Production Method for EVOH Resin Composition)

The EVOH resin composition contains EVOH and a sodium ion.

In order to produce the EVOH resin composition, the EVOH may be made to contain a sodium ion. In order to make the EVOH to contain a sodium ion, for example, a method of bringing an EVOH pellet into contact with a sodium compound can be used.

The EVOH pellet can be produced by a known method, and can be produced, for example, by melting and kneading the EVOH described above with an extruder, and then cutting after discharging.

Examples of the sodium compound include a salt, an oxide, and a hydroxide of the sodium. Among these, the salt of the sodium is preferred from the viewpoint of dispersibility.

Examples of the salt include an inorganic salt and an organic acid salt.

Examples of the inorganic salt include a carbonate, a hydrogen carbonate, a phosphate, a borate, a sulfate, and a chloride.

Examples of the organic acid salt include monocarboxylic acid salts having 2 to 11 carbon atoms, such as acetate, butyrate, propionate, enanthate, and caprate; dicarboxylic acid salts having 2 to 11 carbon atoms, such as oxalate, malonate, succinate, adipate, suberate, and sebacate; and monocarboxylic acid salts having 12 or more carbon atoms, such as laurate, palmitate, stearate, 12-hydroxystearate, behenate, and montanate. These may be used alone or in combination of two or more.

Among these, from the viewpoint of preventing delamination, an organic acid salt is preferred, a monocarboxylic acid salt having 2 to 11 carbon atoms is more preferred, and an acetate is still more preferred.

Examples of the method of bringing an EVOH pellet into contact with a sodium compound include: i) a method of bringing an EVOH pellet into contact with a sodium compound in a production stage of the EVOH pellet, and ii) a method of bringing an EVOH pellet prepared in advance into contact with a sodium compound.

Examples of the method i) includes: ia) a method of adding a sodium compound to a raw material of an EVOH pellet (e.g., an EVOH solution and water-containing composition, or dry EVOH), and ib) a method of adding a solution containing a sodium compound to a coagulation liquid for extrusion molding of an EVOH pellet.

The EVOH solution and water-containing composition refers to a water-containing composition in a state in which the EVOH is melted in water and alcohol, which is obtained when the EVOH pellet is produced.

When the EVOH solution and water-containing composition is used in the method ia), a sodium compound may be dispersed in the EVOH solution and water-containing composition. When a dry EVOH is used, the dry EVOH may be melted, and the EVOH in the melted state and a sodium compound may be melted and kneaded by an extruder.

Examples of the method ii) include: iia) a method of spraying a solution containing a sodium compound onto an EVOH pellet, iib) a method of immersing an EVOH pellet in a solution containing a sodium compound, iic) a method of charging an EVOH pellet while stirring a solution containing a sodium compound, and iid) a method of directly adding and mixing a powder of a sodium compound to an EVOH pellet.

Among these, the method iib) and the method iic) are preferred, and the method iib) is more preferred, from the viewpoint that the EVOH resin composition can be efficiently produced.

Examples of a solvent used in the solution containing a sodium compound include water, alcohol, and a water-alcohol mixture.

Examples of the water include purified water and ion exchange water. Examples of the alcohol include methanol, ethanol, and propanol.

In the water and alcohol mixed solution, the water/alcohol (mass ratio) is usually 90/10 to 10/90.

The concentration of the sodium compound in the solution containing a sodium compound is usually 0.001 mass% to 1 mass%, and preferably 0.01 mass% to 0.1 mass%.

When the concentration is too low, it tends to be difficult to contain a predetermined amount of a sodium compound, and when the concentration is too high, the appearance of the resulting EVOH resin composition tends to deteriorate.

The temperature of the solution containing a sodium compound is usually 0 to 120°C, and preferably 10°C to 80°C, from the viewpoint of efficiently producing the EVOH resin composition.

In the method iib), the immersion time is usually 1 minute to 5 minutes, and preferably 2 minutes to 3 minutes. In the method iic), the stirring time after the charging of the EVOH pellet is usually 0.5 minute to 5 minutes, and preferably 2 minutes to 3 minutes.

Thus, the EVOH can contain a sodium ion.

The content of sodium ion in the EVOH resin composition is preferably 10 ppm to 500 ppm, more preferably 50 ppm to 500 ppm, and still more preferably 100 ppm to 400 ppm.

When the content of the sodium ion is 10 ppm or more, the sodium ion can effectively act as a catalyst that increases the adhesive strength between the EVOH layer and the adhesive resin layer.

In addition, the sodium ion is characterized in that a molecular chain of the EVOH is cleaved to decompose the EVOH. When the content of the sodium ion is large, decomposition of the EVOH is promoted, and thus the following two problems occur.
(1) The viscosity of the EVOH decreases, an interface between the EVOH layer and the adhesive resin layer is disturbed, and thus the adhesion between the EVOH layer and the adhesive resin layer is inhibited.
(2) Radicals in an end portion of the decomposed EVOH react again to generate a gel. Since the gel does not react with the adhesive resin, adhesion between the EVOH layer and the adhesive resin layer is inhibited.

When the content of the sodium ion is 500 ppm or less, a large amount of sodium ions is not present at the interface portion between the EVOH layer and the adhesive resin layer, and thus adhesion between the EVOH layer and the adhesive resin layer is not inhibited.

Therefore, in the multilayer structure having the EVOH layer made of the EVOH resin composition containing 10 ppm to 500 ppm of sodium ions, delamination does not occur even when the sterilization treatment is performed under a high pressure of 100 MPa or more.

The content of the sodium ion in the EVOH resin composition can be adjusted to the above range by, for example, adjusting the concentration of the sodium compound in the solution containing a sodium compound, the contact time between the solution and the EVOH pellet, the water content of the EVOH pellet, and the like.

The content of the sodium ion in the EVOH resin composition can be quantified by atomic absorption spectrometry using a test solution prepared by adding pure water so as to be a constant volume to a solution obtained by heating and ashing the EVOH resin composition and then being treated with hydrochloric acid.

The EVOH resin composition may contain additives, so long as these additives do not lessen the effects of the present invention. Examples of such additives include a heat stabilizer, an antioxidant, an antistatic agent, a colorant, an ultraviolet absorber, a lubricant, a plasticizer, a light stabilizer, a surfactant, an antibacterial, a drying agent, an antiblocking agent, a flame retardant, a crosslinking agent, a curing agent, a blowing agent, a nucleator, an antifogging agent, an additive for biodegradation, a silane coupling agent, and an oxygen absorber. In order to make the EVOH resin composition contain these additives, for example, the EVOH resin composition and these additives may be mixed and stirred.

Examples of the heat stabilizer include the following substances used for improving various properties including thermal stability during melt molding: organic acids such as acetic acid, propionic acid, butyric acid, lauric acid, stearic acid, oleic acid, and behenic acid, zinc salts thereof, inorganic acids such as sulfuric acid, sulfurous acid, carbonic acid, phosphoric acid, and boric acid, and zinc salts thereof.

In the case of producing a packaging material for a package to be sterilized by a high pressure treatment, the EVOH resin composition preferably further contains a polyamide-based resin. In order to make the EVOH resin composition contain the polyamide-based resin, for example, the EVOH resin composition and the polyamide-based resin may be mixed and stirred.

Amide bonds in the polyamide-based resin form a network structure by interaction with hydroxyl groups and/or ester groups of the EVOH, thereby preventing the EVOH from dissolving away during the high pressure treatment.

As the polyamide-based resin, a known polyamide-based resin can be used. For example, the same ones used for a polyamide-based resin layer described below can be used. The content of the polyamide-based resin in the EVOH resin composition is preferably 10 mass% to 20 mass%, and more preferably 12 mass% to 15 mass%.

The acetic acid content of the EVOH resin composition is preferably 1 ppm to 1000 ppm, more preferably 10 ppm to 500 ppm, and particularly preferably 20 ppm to 200 ppm. When the acetic acid content is too large, acetic acid becomes gas and volatilizes during molding, and thus there is a possibility that the extruder is damaged. When the acetic acid content is too small, yellowing of the pellets cannot be sufficiently prevented.

The acetic acid content of the EVOH resin composition can be quantified by heating 100 parts of the EVOH resin composition in 250 parts of ion exchanged water under stirring at 95°C for 3 hours to obtain a filtrate, and neutralizing acetic acid in the filtrate with sodium hydroxide.

The phosphoric acid compound content (in terms of phosphate) of the EVOH resin composition is preferably 10 ppm to 100 ppm, more preferably 15 ppm to 90 ppm, and particularly preferably 20 ppm to 70 ppm. When the phosphoric acid compound content (in terms of phosphate) is too large, there is a concern that the EVOH may be crosslinked with phosphoric acid as a crosslinking point and increase in viscosity may be caused. When the phosphoric acid compound content (in terms of phosphate) is too small, the color tone of the EVOH may be yellowed.

The phosphoric acid compound content (in terms of phosphate) in the EVOH resin composition can be quantified by ion chromatography based on a phosphate extracted by heating 100 parts of the EVOH resin composition in 250 parts of a 0.1 N aqueous nitric acid solution under stirring at 95°C for 3 hours.

The boron compound content (in terms of boron) in the EVOH resin composition is preferably 0.1 ppm to 2000 ppm, more preferably 1 ppm to 1000 ppm, and particularly preferably 10 ppm to 500 ppm. When the boron compound content (in terms of boron) is too large or too small, the melt viscosity is too high, so that there is a possibility that a stable thickness or appearance may not be obtained at the time of film formation.

The boron compound content (in terms of boron) in the EVOH resin composition can be quantified by using an inductively coupled plasma emission spectrometer (ICP-AES) using, as a test solution, a solution prepared by adding pure water so as to ne a constant volume to a solution obtained by subjecting the EVOH resin composition to a decomposition treatment together with concentrated nitric acid by a microwave decomposition method.

In addition, the melt flow rate (MFR) of the EVOH resin composition (210°C, load: 2,160 g) is preferably 0.1 g/10 min to 50 g/10 min, more preferably 1 g/10 min to 20 g/10 min, and particularly preferably 2 g/10 min to 6 g/10 min. When the MFR is too high, the EVOH tends to have a reduced film-forming property. When the MFR is too low, the EVOH tends to have a too high melt viscosity and be difficult to melt-extrude.

The thickness of the EVOH layer is, for example, 1 µm to 30 µm, preferably 3 µm to 28 µm, and more preferably 5 µm to 25 µm per layer.

### <Heat Sealing Resin Layer>

The heat sealing resin layer is a layer that can be melted by heat and fused to each other.

As a heat sealing resin used for the heat sealing resin layer, a well-known resin having a heat sealing property can be used.

Examples thereof include polyolefin-based resins such as polyethylene (e.g., linear low density polyethylene (LLDPE)), polypropylene, ethylene-vinyl acetate copolymers, ionomer resins, ethylene-ethyl acrylate copolymers, ethylene-acrylic acid copolymers, ethylene-methacrylic acid copolymers, ethylene-propylene copolymers, methylpentene polymers, polyethylene, and polypropylene, and acid-modified polyolefin-based resins obtained by modifying these polyolefin-based resins with acrylic acid, methacrylic acid, maleic anhydride, fumaric acid, or other unsaturated carboxylic acids.

Among these, a polyolefin-based resin is preferred from the viewpoint of imparting sufficient self-supporting property to a package such as a stand-up pouch. Among them, linear low density polyethylene (LLDPE) or polypropylene is preferred, and polypropylene is particularly preferred from the viewpoint of preventing dissolving away after the high pressure treatment.

The thickness of the heat sealing resin layer is, for example, 3 µm to 200 µm, preferably 10 µm to 110 µm, and more preferably 20 µm to 90 µm. When there are a plurality of heat sealing resin layers, the total thickness of all the heat sealing resin layers is defined as the thickness of the heat sealing resin layer. When the thickness is too small, the seal strength of a seal portion tends to decrease, and when the thickness is too large, the stiffness increases, and the openability when a package such as a stand-up pouch is filled with food or the like tends to decrease.

In the present invention, the openability refers to a property that, when a package such as a stand-up pouch is filled with food or the like, a packaging bag mouth easily opens with respect to the blowing of gas such as air and can be used for automatic packaging.

### <Adhesive Resin Layer>

The adhesive resin layer is provided to increase the adhesive strength of each layer. When the adhesive resin layers are not properly disposed, each layer tends to be delaminated with a slight force, making the adhesive resin layer unbearable for use as a package such as a stand-up pouch.

A known adhesive resin can be used as the adhesive resin constituting the adhesive resin layer. Typical examples of the adhesive resin include a modified polyolefin-based polymer containing a carboxyl group and obtained by chemically bonding an unsaturated carboxylic acid or an anhydride thereof to a polyolefin-based resin by an addition reaction, a graft reaction, or the like. Examples thereof include polyethylene modified by grafting with maleic anhydride, polypropylene modified by grafting with maleic anhydride, an ethylene-propylene (block and random) copolymer modified by grafting with maleic anhydride, an ethylene-ethyl acrylate copolymer modified by grafting with maleic anhydride, an ethylene-vinyl acetate copolymer modified by grafting with maleic anhydride, a polycycloolefin-based resin modified with maleic anhydride, and a polyolefin-based resin modified by grafting with maleic anhydride. One polymer selected from among these or a mixture of two or more thereof can be used.

In the multilayer structure according to the present invention, there may be a plurality of adhesive resin layers. The thickness of the adhesive resin layer is preferably 1 µm to 30 µm, more preferably 2 µm to 20 µm, and particularly preferably 3 µm to 10 µm per layer.

### <Polyamide-based Resin>

The multilayer structure according to the present invention may have a polyamide-based resin layer.

The polyamide-based resin layer can improve the gas barrier property and the bag falling resistance.

The sodium ion contained in the EVOH layer promotes a radical reaction between the EVOH and the polyamide-based resin. Therefore, when the EVOH layer and the polyamide-based resin layer are adjacent to each other, the bond strength between the EVOH layer and the polyamide-based resin layer is improved by the action of the sodium ion, and the delamination can be prevented.

The polyamide-based resin constituting the polyamide-based resin layer is a water-insoluble thermoplastic resin, and a known and general resin can be used.

Examples of the polyamide-based resin include homopolymers such as polycapramide (nylon 6), poly-co-aminoheptanoic acid (nylon 7), poly-ω-aminononanoic acid (nylon 9), polyundecaneamide (nylon 11), and polylauryllactam (nylon 12), as well as copolymerized polyamide-based resins.

Examples of the copolymerized polyamide-based resin include aliphatic polyamides such as polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 108), a caprolactam/lauryllactam copolymer (nylon 6/12), a caprolactam/ω-aminononanoic acid copolymer (nylon 6/9), a caprolactam/hexamethylenediamine adipate copolymer (nylon 6/66), a lauryllactam/hexamethylenediamine adipate copolymer (nylon 12/66), an ethylenediamine adipamide/hexamethylenediammonium adipate copolymer (nylon 26/66), a caprolactam/hexamethylenediammonium adipate/hexamethylenediammonium sebacate copolymer (nylon 66/610), and an ethyleneammonium adipate/hexamethylenediammonium adipate/hexamethylenediammonium sebacate copolymer (nylon 6/66/610); aromatic polyamides such as polyhexamethylene isophthalamide, polyhexamethylene terephthalamide, polymethaxylylene adipamide, a hexamethylene isophthalamide/terephthalamide copolymer, poly-p-phenylene terephthalamide, and poly-p-phenylene-3,4'-diphenyl ether terephthalamide; amorphous polyamides, modified polyamides obtained by modifying these polyamide-based resins with an aromatic amine such as methylene benzylamine and metaxylenediamine, and metaxylylene diammonium adipate. Alternatively, terminal-modified polyamide-based resins of these polyamide-based resins can also be used. These polyamide-based resins can be used alone or in combination of two or more.

The content (on a molecular weight basis) of the amide bond in the amide monomer unit constituting the polyamide-based resin is preferably 20% to 60%, more preferably 30% to 50%, and particularly preferably 35% to 45%. For example, in the case of nylon 6, the above content is the ratio (%) of the molecular weight of the amide bond (-CONH-) to the molecular weight of [-C₆H₅-CONH-].

When the ratio is too small, the bonding force at an interface with a polar resin such as EVOH tends to be easily reduced, and conversely, when the ratio is too large, the reactivity with the polar resin such as EVOH during melt molding is too strong, and then there is a tendency to cause poor appearance due to rough adhesion interface when co-extrusion is performed.

The melting point of the polyamide-based resin is preferably 160°C to 270°C, more preferably 180°C to 250°C, and particularly preferably 200°C to 230°C. When the melting point is too low, heat resistance tends to decrease when the multilayer structure is formed. On the other hand, when the melting point is too high, the difference in melting point from the resin used in other layers becomes large when the multilayer structure is formed. When the difference in melting point from the resin used in other layers becomes large, in the case of co-extrusion molding with the resin used in other layers, layer disturbance tends to occur at the time of merging, resulting in deterioration of the appearance when the multi-layer structure is formed. Further, when the melting point is too high, the die temperature is too high when the EVOH and the polyamide-based resin are co-extruded, and there is a concern that coloring due to thermal deterioration of the EVOH may be promoted.

From the above viewpoints, as the polyamide-based resin, a polyamide-based resin in which the content of the amide bond is within a preferable range and the melting point is within a preferable range is most preferred. Specifically, for example, nylon 6 (melting point: about 220°C, content of amide bond: 38%) and nylon 6/66 (melting point: about 200°C, content of amide bond: 38%) are most preferred.

The polymerization degree of the polyamide-based resin can be generally represented by a relative viscosity, and is usually preferably 1.5 to 6, more preferably 2.0 to 6, and still more preferably 2.5 to 5. When the relative viscosity is too small, there is a tendency that the extruder is in a high torque state at the time of molding and extrusion processing becomes difficult, and when the relative viscosity is too large, there is a tendency that the thickness accuracy of the obtained film or sheet decreases. The relative viscosity can be measured by completely dissolving 1 g of the polyamide-based resin in 100 ml of 96% concentrated sulfuric acid and using a capillary viscometer at 25°C in accordance with JIS K6933.

When the multilayer structure according to the present invention has the polyamide-based resin layer, the thickness of the polyamide-based resin layer is preferably 1 µm to 100 µm, more preferably 1 µm to 80 µm, still more preferably 5 µm to 60 µm, and particularly preferably 10 µm to 40 µm. Note that the polyamide-based resin layer may be either a single layer or a plurality of layers, and in the case of a plurality of layers, the total thickness of the polyamide-based resin layers in the multilayer structure may be within the above range.

When the thickness of the polyamide-based resin layer is too small, the recovery rate of the gas barrier property after the high pressure treatment tends to be slow, and when the thickness is too large, the thickness of the entire package such as a stand-up pouch increases as a result, so that the stiffness increases, and the openability when the package such as a stand-up pouch is actually filled with food or the like tends to reduce.

### <Other Resin Layers>

The multilayer structure according to the present invention may further have other resin layers in addition to the above-mentioned layer, and the position where the other resin layer is laminated is optional.

As the resin constituting the other resin layer, known ones can be used. Specific examples of such a resin include polyester-based resins such as polyethylene terephthalate and polyethylene naphthalate, polyaramid-based resins, polypropylene-based resins, polyethylene-based resins, polycarbonate-based resins, polyacetal-based resins, and fluorine-based resins.

When the multilayer structure according to the present invention has the other resin layers, the thickness of the other resin layers is preferably 1 µm to 100 µm, more preferably 5 µm to 90 µm, and particularly preferably 10 µm to 80 µm per layer.

### <Base Material Film>

The multilayer structure according to the present invention may have a base material film.

As the base material film, it is preferred to use a film or sheet of a resin which has excellent strength mechanically, physically, chemically, etc., and which is excellent in terms of piercing resistance, heat resistance, moisture resistance, pinhole resistance, transparency, etc.

Specifically, as the base material film, for example, a film or sheet obtained from polyester-based resins such as polyethylene terephthalate and polyethylene naphthalate, polyamide-based resins such as various nylon resins, polyaramid-based resins, polypropylene-based resins, polyethylene-based resins, polycarbonate-based resins, polyacetal-based resins, fluorine resins, and other tough resins can be used. Among them, a polyester-based resin film obtained from a polyester-based resin is preferred from the viewpoint of excellent dimensional stability and printability.

As the above film or sheet of a resin, any of a non-stretched film or a stretched film which stretched in uniaxial or biaxial direction, or the like may be used.

When the multilayer structure according to the present invention has the base material film, the thickness of the base material film may be a thickness that can be maintained in terms of strength, piercing resistance, and the like. When the thickness of the base material film is too large, the cost tends to increase, and conversely, when the thickness is too small, the strength, the piercing resistance, and the like tend to decrease.

For the reasons described above, the thickness of the base material film is preferably 3 µm to 100 µm, and particularly preferably 10 µm to 50 µm.

Further, the base material film may be suitably provided with a printed layer as needed. Examples of the printed layer include a layer formed from an ink obtained by mixing a solvent, a binder resin such as a urethane-, acrylic-, nitrocellulose-, or rubber-based binder, various pigments, extender pigments, a plasticizer, a drying agent, a stabilizer, etc. Characters, a design, etc. can be formed by the printed layer. As a printing method, any of known printing methods such as offset printing, gravure printing, flexographic printing, silk screen printing, and ink-jet printing can be used. By subjecting the surface of the base material film beforehand to a corona treatment or an ozone treatment as a pretreatment, the adhesiveness of the printed layer can be improved.

### <Adhesive Layer>

The multilayer structure according to the present invention may include an adhesive layer used when laminating two types of layers. A dry lamination adhesive can be used for the adhesive layer. Examples of the dry lamination adhesive include a two-component curable urethane-based adhesive, a polyester urethane-based adhesive, a polyether urethane-based adhesive, an acrylic adhesive, a polyester-based adhesive, a polyamide-based adhesive, and an epoxy-based adhesive. Examples of a method of adhering two types of layers using these adhesives include a dry laminating method.

Among the above adhesives, it is preferred to use a two-component curable urethane-based adhesive that has excellent adhesive force and whose adhesive force does not easily decrease due to urethane bonding.

The two-component curable urethane adhesive is composed of a main agent and a curing agent, and a two-component curable urethane-based adhesive composed of a polyester polyol and a polyfunctional polyisocyanate is preferred. Examples of the polyfunctional polyisocyanate include diphenylmethane diisocyanate (MDI), hexamethylene diisocyanate (HDI), toluene diisocyanate (TDI), and isophorone diisocyanate (IPDI).

When the multilayer structure according to the present invention has an adhesive layer, the thickness of the adhesive layer is not particularly limited, but is preferably 0.1 µm or more in order to maintain sufficient adhesion.

### <Easy-peel Resin Layer>

The multilayer structure according to the present invention may have an easy-peel resin layer.

The easy-peel resin layer can improve the ease of opening of the package having the multilayer structure according to the present invention.

Examples of the easy-peel resin constituting the easy-peel resin layer include a mixed resin of polyethylene and polypropylene, a mixed resin of polyethylene and polybutene, a mixed resin of polyethylene and a thermoplastic elastomer, and a mixed resin of polyethylene and polystyrene. Alternatively, a multilayer body formed from a resin composition having a different melting point, such as a multilayer body of vinyl acetate and polyethylene, a multilayer body of polypropylene and polyethylene, or a multilayer body having polyethylene having a different density, may be used.

When the multilayer structure according to the present invention includes an easy-peel resin layer, the thickness of the easy-peel resin layer is preferably 20 µm to 200 µm, more preferably 30 µm to 150 µm, still more preferably 40 µm to 120 µm, and particularly preferably 50 µm to 100 µm. The easy-peel resin layer may be either a single layer or a plurality of layers, and in the case of a plurality of layers, the total thickness of the easy-peel resin layers in the multilayer structure may be within the above range.

### <Layer Configuration>

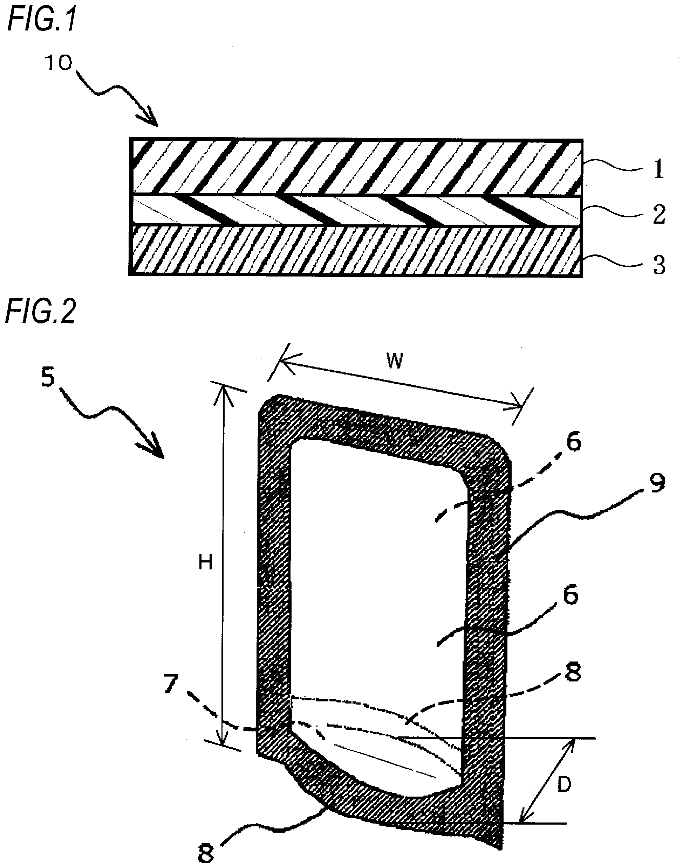

As a preferred embodiment of the multilayer structure according to the present invention, for example, as shown in FIG. 1, the multilayer structure 10 has a heat sealing resin layer 1, an adhesive resin layer 2, and an EVOH layer 3.

More specific examples of the layer configuration include heat sealing resin layer/adhesive resin layer/EVOH layer/adhesive resin layer/heat sealing resin layer, base material film/adhesive layer/heat sealing resin layer/adhesive resin layer/EVOH layer/adhesive resin layer/heat sealing resin layer, base material film/adhesive layer/heat sealing resin layer/adhesive resin layer/polyamide layer/EVOH layer/polyamide layer/adhesive resin layer/heat sealing resin layer, base material film/adhesive resin layer/heat sealing resin layer/adhesive resin layer/EVOH layer/polyamide layer/adhesive resin layer/heat sealing resin layer, and base material film/adhesive layer/heat sealing resin layer/adhesive resin layer/EVOH layer/polyamide layer/adhesive resin layer/easy-peel resin layer.

### <Layer Thickness>

The total thickness of the multilayer structure according to the present invention is preferably 20 µm to 1000 µm, more preferably 40 µm to 500 µm, still more preferably 50 µm to 300 µm, and particularly preferably 60 µm to 150 µm. When the total thickness is too small, the stiffness for maintaining self-supporting property tends not to be obtained. When the total thickness is too large, the stiffness is too large, and there is a tendency that the openability when a package such as a stand-up pouch is actually filled with food or the like deteriorates.

### <Method for Producing Multilayer Structure>

The multilayer structure according to the present invention can be produced by, for example, a melt molding method, a wet lamination method, a dry lamination method, a solvent-free lamination method, an extrusion lamination method, a co-extrusion lamination method, and an inflation method. Among these, preferred is a melt molding method, from the environmental standpoint that no solvent is used and from the cost standpoint that there is no need of performing lamination in a separate step.

As a method for the melt molding method, a known technique can be employed. Examples thereof include an extrusion molding method (T-die extrusion, tubular-film extrusion, blow molding, melt spinning, profile extrusion, etc.) and an injection molding method. The melt molding temperature is suitably selected usually from a range of 150°C to 300°C.

Thus, the multilayer structure according to the present invention is produced, but when the base material film is further laminated, for example, a wet lamination method, a dry lamination method, a solvent-free lamination method, an extrusion lamination method, a co-extrusion lamination method, an inflation method can be used.

When performing the above lamination, if necessary, for example, the surface of the base material film can be optionally subjected to a pretreatment such as a corona treatment, an ozone treatment, and a frame treatment.

In addition, in the case of dry lamination, for example, a solvent type, water-based type, or emulsion type lamination adhesive containing a vinyl, acrylic, polyurethane, polyamide, polyester, or epoxy as the main component of the vehicle is used.

At this time, for example, an isocyanate-based adhesive aid, a polyethyleneimine-based adhesive aid, another anchor coating agent can be optionally used as the adhesive aid.

In the case of extrusion lamination in the above, for example, a polyethylene, a polypropylene, an ethylene-vinyl acetate copolymer, an ionomer resin, an ethylene-ethyl acrylate copolymer, an ethylene-acrylic acid copolymer, an ethylene-methacrylic acid copolymer, an ethylene-propylene copolymer, a methylpentene polymer, an acid-modified polyolefin-based resin obtained by modifying a polyolefin-based resin such as a polyethylene or a polypropylene with acrylic acid, methacrylic acid, maleic anhydride, fumaric acid, and another unsaturated carboxylic acid can be used as the resin for melt extrusion lamination.

### [Package]

The multilayer structure according to the present invention can be used as a package, and for example, can be used as a stand-up pouch.

### <Stand-up Pouch>

The stand-up pouch is formed of the multilayer structure according to the present invention. The stand-up pouch includes a body portion and a bottom portion provided perpendicular to the body portion, and has stiffness that allows the stand-up pouch to stand on its own when filled with contents.

Fig. 2 is an overall perspective view showing an example of the stand-up pouch. A stand-up pouch 5 includes two front and back body sheets 6, 6 and a bottom sheet 7. The body sheet 6 and the bottom sheet 7 are flexible sheets, and are obtained by cutting the multilayer structure according to the present invention into a desired size.

The bottom sheet 7 is inserted between lower portions of the two body sheets 6, 6 in a folded state. A bottom seal portion 8 is formed by sealing lower edge portions of the body sheets 6, 6 and a peripheral edge of the bottom sheet 7. A side seal portion 9 is formed by sealing left and right edges of the body sheet 6, 6 in an overlapped state. Accordingly, the bottom sheet 7 expands to form the stand-up pouch in a state of being filled with contents.

In the present invention, with the upper portion of the stand-up pouch 5 open, the contents such as desired food and drink are filled through the opening. Then, the upper opening is heat-sealed to form a top-sealed portion or the like to produce a semi-finished package. Thereafter, the semi-finished package is subjected to a high pressure treatment to produce products having various forms.

The stand-up pouch can be provided with a joint or can be provided with a design at an optional position.

The dimension of the stand-up pouch is the dimension of the multilayer structure portion not including the joint or the like. For example, the width W is 50 mm to 1000 mm, preferably 100 mm to 500 mm, and particularly preferably 100 mm to 200 mm. The height H is 50 mm to 1000 mm, preferably 100 mm to 500 mm, and particularly preferably 150 mm to 300 mm. The depth D of the bottom portion is 10 mm to 500 mm, preferably 20 mm to 300 mm, and particularly preferably 30 mm to 100 mm. The dimension can be made into desired dimensions by adjusting the sizes of the body sheet 6 and the bottom sheet 7 constituting the stand-up pouch.

The ratio (H/W) of the height H to the width W is, for example, 0.2 to 5, preferably 1 to 3, and particularly preferably greater than 1 and 1.5 or less. When the ratio (H/W) is within such a range, the visibility and display efficiency of the stand-up pouch tend to be improved. In order to make the stand-up pouch self-supporting, the bottom sheet is inserted in a folded state, and in the self-supporting state of the stand-up pouch, the bottom sheet is opened from the folded state.

Although the sheet 7 is rectangular, the bottom sheet 7 is formed into a substantially elliptical shape by adjusting the bottom portion in order to keep the depth D of the bottom portion of the stand-up pouch within the above range. The size of the substantially elliptical shape formed by the bottom sheet 7 is such that the major axis is a size same as the width of the body sheet 6, and the minor axis is 10 mm to 500 mm, preferably 20 mm to 300 mm, and particularly preferably 30 mm to 100 mm. Such a minor axis is usually 1 to 1.5 times the depth D of the bottom portion.

Next, a specific method for producing the stand-up pouch will be described.

### <Method for Producing Stand-up Pouch>

First, in order to form a stand-up pouch, the multilayer structure according to the present invention is slit to a predetermined width to form a body sheet and a bottom sheet. As shown in Fig. 2, two body sheets 6, 6 are overlapped so as to face each other, and the bottom sheet 7 is sandwiched between the lower portions of the two body sheets 6, 6 to seal the bottom portion and the left and right sides. Then, the bottom seal portion 8 and the left and right side seal portions 9 are formed, respectively, and the stand-up pouch having an open top portion, that is, upper portion is formed.

The stand-up pouch 5 having an open upper portion is filled with the content, and then the open portion is heat-sealed to form the stand-up pouch 5.

The stand-up pouch thus formed has an improved self-supporting property, and has no breakage of the side seal or deformation of the packaging bag due to crushing even when the contents are used and the amount thereof is reduced, and can be bent between air-filled portions, so that the volume of the packaging bag can be reduced for storage. In addition, even when the packaging bag is discarded after use, the volume of the packaging bag can be reduced by bending and folding between the air-filled portions.

The stand-up pouch can be obtained by using the multilayer structure according to the present invention in at least a part of the body sheet and the bottom sheet. A stand-up pouch made of the multilayer structure according to the present invention, which uses the multilayer structure according to the present invention for all of the body sheet and the bottom sheet, is most preferred in that the effect of the present invention can be obtained more effectively.

### <Contents of Stand-up Pouch>

Examples of the contents to be filled and packaged into a packaging bag constituting the stand-up pouch include various foods and drinks such as fruits, cooked foods, fish paste products, frozen foods, simmered dishes, rice cakes, liquid soups, seasonings, and drinking water. Specific examples thereof include liquid foods such as curry, stew, soup, meat sauce, hamburger steak, meatballs, sushi, oden, and porridge, jelly-like foods, and water.

### [Processing Method for Package]

The package having the multilayer structure according to the present invention is subjected to a high pressure treatment. Here, the high pressure treatment referred to in the present invention is, for example, a sterilization treatment performed under high pressure conditions using water as a medium.

The high pressure treatment can be performed under low temperature conditions as compared with a retort sterilization treatment that is generally performed. For this reason, there is an advantage that the color, aroma, and nutrients of the contents are not impaired, and the high pressure treatment is used as a non-heat sterilization treatment.

Since the high pressure treatment is a treatment under a high pressure in hydrostatic pressure, water permeates into the food during the high pressure treatment. Therefore, the high pressure treatment is also used in food processing because the high pressure treatment enables a tasty and uniform flavouring to be achieved.

Further, when the high pressure treatment is performed, the protein is denatured and hardened under a high pressure, and thus the high pressure treatment may be used also when producing a processed food such as a jam or a sauce.

The pressure employed in the high pressure treatment is usually 100 MPa or more, preferably 100 MPa to 900 MPa, more preferably 150 MPa to 800 MPa, and particularly preferably 200 MPa to 700 MPa.

The temperature employed in the high pressure treatment is usually 0 to 90°C, preferably 5°C to 85°C, and particularly preferably 50°C to 80°C.

The processing time employed in the high pressure treatment is preferably 0.5 minute to 60 minutes, and particularly preferably 1 minute to 45 minutes.

By increasing the processing pressure, the sterilization capability is increased, but the load on the device is increased. On the other hand, in order to increase the processing temperature, the processing device becomes large in size, and thus there is a concern that the cost of the processing device increases. It is desirable to obtain the treatment conditions from sterilization conditions obtained from pH and water activity in actual contents.

In the above description, the multilayer structure according to the present invention has been described as being used in a stand-up pouch as a package, but the multilayer structure according to the present invention can also be used as a package having a shape such as a gusset package, a flat pouch or pillow package which is not a self-supporting type, a tray, a tube, a cup.

### [Example]

The present invention will be specifically described by ways of the following Example, but the present invention is not limited to the description of Examples, unless the gist of the present invention is exceeded.

In Examples, "%" means "% by mass" unless otherwise specified.

### [Production Examples 1 to 4]

EVOH whose ethylene content and degree of saponification were adjusted to be as shown in Table 1, sodium acetate, and calcium phosphate were used to obtain EVOH resin compositions A to D whose metal ion content and melt flow rate (MFR) were adjusted to be as shown in Table 1.

### [Production Examples 5 to 7]

EVOH whose ethylene content and degree of saponification were adjusted to be as shown in Table 1 and sodium acetate were used to obtain EVOH resin compositions E to G whose metal ion content and melt flow rate (MFR) were adjusted to be as shown in Table 1.

### [Production Example 8]

EVOH whose ethylene content and degree of saponification were adjusted to be as shown in Table 1 and sodium stearate were used to obtain an EVOH resin composition H whose metal ion content and melt flow rate (MFR) were adjusted to be as shown in Table 1.

### [Production Example 9]

EVOH whose ethylene content and degree of saponification were adjusted to be as shown in Table 1 and sodium acetate were used to obtain an EVOH resin composition I whose metal ion content and melt flow rate (MFR) were adjusted to be as shown in Table 1.

### [Production Example 10 to 12]

EVOH whose ethylene content and degree of saponification were adjusted to be as shown in Table 1 was used to obtain EVOH resin compositions J to L whose melt flow rate (MFR) was adjusted to be as shown in Table 1.

### [Production Example 13]

EVOH whose ethylene content and degree of saponification were adjusted to be as shown in Table 1 and sodium acetate were used to obtain an EVOH resin composition M whose metal ion content and melt flow rate (MFR) were adjusted to be as shown in Table 1.

### [Production Example 14]

EVOH whose ethylene content and degree of saponification were adjusted to be as shown in Table 1 and lithium stearate were used to obtain an EVOH resin composition N whose metal ion content and melt flow rate (MFR) were adjusted to be as shown in Table 1.

### [Production Example 15]

EVOH whose ethylene content and degree of saponification were adjusted to be as shown in Table 1 and potassium acetate were used to obtain an EVOH resin composition O whose metal ion content and melt flow rate (MFR) were adjusted to be as shown in Table 1.

### [Production Example 16]

EVOH whose ethylene content and degree of saponification were adjusted to be as shown in Table 1 and calcium stearate were used to obtain an EVOH resin composition P whose metal ion content and melt flow rate (MFR) were adjusted to be as shown in Table 1.

### [Physical Properties of EVOH Resin Compositions A to P]

The metal ion content and the melt flow rate (MFR) of the EVOH resin compositions A to P were obtained by the following methods.

### (Metal Ion Content)

To a solution obtained by heating and ashing 10 g of each EVOH resin composition at 700°C for 3 hours and being treated with hydrochloric acid, pure water was added and the volume was adjusted to 50 mL as a test solution, and the content of each metal ion (sodium ion, calcium ion, lithium ion, and potassium ion) was determined by atomic absorption spectrometry.

### (Melt Flow Rate (MFR))

The melt flow rate (MFR) of each EVOH resin composition was measured at 210°C under a load of 2160 g.

**[Table 1]**

| | Resin | EVOH | | | Metal ion content (ppm) | | | | MFR (g/10 minutes) |
|---|---|---|---|---|---|---|---|---|---|
| | | Ethylene content (mol%) | Degree of saponification (mol%) | 1,2-diol structure content (mol%) | Sodium ion | Calcium ion | Lithium ion | Potassium ion | |
| Production Example 1 | A | 25.0 | 99.8 | - | 178 | 8 | 0 | 0 | 4.1 |
| Production Example 2 | B | 28.9 | 99.8 | - | 180 | 9 | 0 | 0 | 4.2 |
| Production Example 3 | C | 31.3 | 99.8 | - | 191 | 11 | 0 | 0 | 3.9 |
| Production Example 4 | D | 39.4 | 99.8 | 1.5 | 250 | 15 | 0 | 0 | 4.1 |
| Production Example 5 | E | 44.2 | 99.8 | - | 152 | 0 | 0 | 0 | 3.1 |
| Production Example 6 | F | 28.9 | 99.8 | - | 30 | 0 | 0 | 0 | 8.8 |
| Production Example 7 | G | 28.9 | 99.8 | - | 180 | 0 | 0 | 0 | 8.8 |
| Production Example 8 | H | 28.9 | 99.8 | - | 180 | 0 | 0 | 0 | 8.8 |
| Production Example 9 | I | 28.9 | 99.8 | - | 360 | 0 | 0 | 0 | 8.8 |
| Production Example 10 | J | 29.2 | 99.8 | - | 0 | 0 | .0 | 0 | 3.1 |
| Production Example 11 | K | 44.3 | 99.8 | - | 0 | 0 | 0 | 0 | 3.1 |
| Production Example 12 | L | 28.9 | 99.8 | - | 0 | 0 | 0 | 0 | 8.8 |
| Production Example 13 | M | 28.9 | 99.8 | - | 720 | 0 | 0 | 0 | 8.8 |
| Production Example 14 | N | 28.9 | 99.8 | - | 0 | 0 | 180 | 0 | 8.8 |
| Production Example 15 | 0 | 28.9 | 99.8 | - | 0 | 0 | 0 | 180 | 8.8 |
| Production Example 16 | P | 28.9 | 99.8 | - | 0 | 180 | 0 | 0 | 8.8 |

### [Other Resin Compositions]

As resin compositions Q and R, the following compositions were prepared.

Resin composition Q: polyamide 6 (manufactured by Ube Industries, Ltd., grade name "1020"), melting point: 220°C

Resin composition R: metaxylenediamine (manufactured by Mitsubishi Gas Chemical Company, Inc., grade name: "S6007"), melting point: 240°C

### [Example 1]

The following materials were prepared as materials for each layer included in a multilayer structure.

Heat sealing resin layer: polypropylene ("EA7AD" manufactured by Japan Polypropylene Corporation)

Homopolypropylene adhesive resin layer: polypropylene-based adhesive resin ("Plexar" manufactured by Lyondell Basell Corporation, grade "PX6002")

EVOH layer: EVOH resin composition A

A multilayer structure of heat sealing resin layer (35 µm)/adhesive resin layer (5 µm)/EVOH layer (10 µm)/adhesive resin layer (5 µm)/heat sealing resin layer (35 µm) was prepared by using a three-kind five-layer multilayer extruder (manufactured by PLACO Co., Ltd.).

### <Evaluation of Multilayer Structure>

### (Interlayer Adhesion)

The delamination strength of the resulting multilayer structure between the adhesive resin layer and the EVOH layer in a flow direction was measured based on JIS K6854-1.

The delamination strength was measured using a tensile tester "Autograph AGS-H" (manufactured by Shimadzu Corporation) under the following conditions.
Size of sample test piece: 15 mm × 300 mm
Tensile test speed: 300 mm/min
Distance between chucks: 50 mm

The measured delamination strength was evaluated based on the following criteria.

### [Evaluation Criteria]

A: Delamination strength was 10 N/15 mm or more.
B: Delamination strength was 3 N/15 mm or more and less than 10 N/15 mm.
C: Delamination strength was less than 3 N/15 mm.

The resulting multilayer structure was subjected to a high pressure treatment using a high pressure sterilizer "Dr.Chef" (manufactured by Kobe Steel, Ltd.) under the conditions of a treatment pressure of 600 MPa, a treatment temperature of 80°C, and a treatment time of 5 minutes, and then the delamination strength was measured and evaluated in the same manner as described above. The results are shown in Table 2. The case of A was regarded as acceptable, and the case of B or C was regarded as unacceptable.

### (Delamination property)

From the resulting multilayer structure, two pieces having a size of 120 mm × 150 mm were prepared, and were stacked and heat-sealed on three sides to obtain a three-sided seal bag. 30 ml of ultrapure water was put in the three-sided seal bag, and heat sealing was performed under vacuum conditions to obtain a package. The state of the resulting package was visually observed, and the delamination property was evaluated based on the following criteria.

Thereafter, the package was subjected to a high pressure treatment under the above conditions, and then the delamination property was evaluated based on the following criteria. The results are shown in Table 2. The case of A was regarded as acceptable, and the case of B or C was regarded as unacceptable.

### [Evaluation Criteria]

A: No delamination was observed between adhesive resin layer and EVOH layer.
B: Delamination of a size of less than 5 mm × 5 mm was confirmed between adhesive resin layer and EVOH layer.
C: Delamination of a size of 5 mm × 5 mm or more was confirmed between adhesive resin layer and EVOH layer.

### (Oxygen Barrier Property)

The oxygen permeability (cc/m²·day·atm) of the resulting multilayer structure was measured using an oxygen permeability measuring device "Ox-tran2/21" (manufactured by Mocon Corporation) under the following conditions.
Measurement conditions for one surface of the multilayer structure: 23°C, 50% RH
Measurement conditions for the other surface of the multilayer structure: 23°C, 90% RH

The resulting multilayer structure was subjected to a high pressure treatment under the above conditions, and then the oxygen permeability (cc/m²·day·atm) was measured in the same manner as described above. The results are shown in Table 2.

### (Food Storage Test)

From the resulting multilayer structure, two pieces having a size of 120 mm × 150 mm were prepared, and were stacked and heat-sealed on three sides to obtain a three-sided seal bag. 30 ml of a 5 mass% of saline solution and an apple (product name: Jonagold) cut into a size of 1/8 by a knife were put into the three-sided seal bag, and heat sealing was performed under vacuum conditions so that air was not contained in a headspace, thereby obtaining a package.

The resulting package was subjected to a high pressure treatment under the above conditions, and was allowed to stand under conditions of 23°C and 50% RH for 7 days. The state of the apple was visually observed, and the state of apple was evaluated based on the following criteria. The results are shown in Table 2. The case of A was regarded as acceptable, and the case of C was regarded as unacceptable.

### [Evaluation Criteria]

A: No browning was observed in apple.
C: Browning was observed in apple.

### [Example 2]

A multilayer structure was produced in the same manner as in Example 1, except that the EVOH resin composition B was used as the EVOH layer instead of the EVOH resin composition A.

The resulting multilayer structure was evaluated in the same manner as in Example 1 except that the treatment pressure during the high pressure treatment was set to 100 MPa. The results are shown in Table 2.

### [Examples 3 to 6]

A multilayer structure was produced in the same manner as in Example 1 except that EVOH resin compositions B to E were used as the EVOH layer instead of the EVOH resin composition A.

The resulting multilayer structure was evaluated in the same manner as in Example 1. The results are shown in Table 2.

### [Example 7]

The following materials were prepared as materials for each layer included in a multilayer structure.
Heat sealing resin layer: polypropylene ("EA7AD" manufactured by Japan Polypropylene Corporation)
Homopolypropylene adhesive resin layer: polypropylene-based adhesive resin ("Plexar" manufactured by Lyondell Basell Corporation, grade "PX6002")
EVOH layer: EVOH resin composition B
Polyamide-based resin: Nylon 6 (1022B manufactured by DSM)

A multilayer structure of EVOH layer (5 µm)/polyamide-based resin layer (25 µm)/adhesive resin layer (5 µm)/heat sealing resin layer (40 µm) was prepared by using a five-kind five-layer multilayer extruder (manufactured by PLACO Co., Ltd.).

The resulting multilayer structure was evaluated in the same manner as in Example 1 except that the delamination property was evaluated based on the following criteria. The results are shown in Table 2.

### [Evaluation Criteria]

A: Delamination was not confirmed between polyamide-based resin layer and EVOH layer.
B: Delamination of a size of less than 5 mm × 5 mm was confirmed between polyamide-based resin layer and EVOH layer.
C: Delamination of 5 mm × 5 mm or more was confirmed between polyamide-based resin layer and EVOH layer.

### [Example 8]

The following materials were prepared as materials for each layer included in a multilayer structure.
Heat sealing resin layer: polypropylene ("EA7AD" manufactured by Japan Polypropylene Corporation)
Homopolypropylene adhesive resin layer: polypropylene-based adhesive resin ("Plexar" manufactured by Lyondell Basell Corporation, grade "PX6002")
EVOH layer: EVOH resin composition B
Polyamide-based resin layer: Nylon 6 (1020J manufactured by DSM)

A multilayer structure of heat sealing resin layer (30 µm)/adhesive resin layer (5 µm)/polyamide-based resin layer (5 µm)/EVOH layer (5 µm)/polyamide-based resin layer (5 µm)/adhesive resin layer (5 µm)/heat sealing resin layer (30 µm) was prepared using a five-kind seven-layer multilayer extruder (manufactured by PLACO Co., Ltd.).

The resulting multilayer structure was evaluated in the same manner as in Example 7. The results are shown in Table 2.

### [Examples 9 to 12]

A multilayer structure was produced in the same manner as in Example 1 except that EVOH resin compositions F to I were used as the EVOH layer instead of the EVOH resin composition A.

The resulting multilayer structure was evaluated in the same manner as in Example 1. The results are shown in Table 2.

### [Comparative Example 1]

A multilayer structure was produced in the same manner as in Example 1, except that the EVOH resin composition J was used as the EVOH layer instead of the EVOH resin composition A.

The resulting multilayer structure was evaluated in the same manner as in Example 1 except that the treatment pressure during the high pressure treatment was set to 100 MPa. The results are shown in Table 2.

### [Comparative Example 2]

A multilayer structure was produced in the same manner as in Example 1, except that the EVOH resin composition J was used as the EVOH layer instead of the EVOH resin composition A.

The resulting multilayer structure was evaluated in the same manner as in Example 1. The results are shown in Table 2.

### [Comparative Example 3]

A multilayer structure was produced in the same manner as in Example 1 except that the EVOH resin composition K was used as the EVOH layer instead of the EVOH resin composition A.

The resulting multilayer structure was evaluated in the same manner as in Example 1 except that the treatment pressure during the high pressure treatment was set to 100 MPa. The results are shown in Table 2.

### [Comparative Example 4]

A multilayer structure was produced in the same manner as in Example 1 except that the EVOH resin composition K was used as the EVOH layer instead of the EVOH resin composition A.

The resulting multilayer structure was evaluated in the same manner as in Example 1. The results are shown in Table 2.

### [Comparative Examples 5 to 11]

A multilayer structure was produced in the same manner as in Example 1 except that the resin compositions L to R were used as the EVOH layer instead of the EVOH resin composition A.

The resulting multilayer structure was evaluated in the same manner as in Example 1. The results are shown in Table 2.

**[Table 2]**

| | | Types of resin composition | Interlayer adhesion | | Delamination property | | Oxygen barrier property Oxygen permeability (cc/m²·day·atm) | | Food storage test | Processing pressure for high pressure treatment (Mpa) |
|---|---|---|---|---|---|---|---|---|---|---|
| | | | Before high pressure treatment | After high pressure treatment | Before high pressure treatment | After high pressure treatment | Before high pressure treatment | After high pressure treatment | | |
| Examples | 1 | A | A | A | A | A | 0.6 | 0.39 | A | 600 |
| | 2 | B | A | A | A | A | 0.85 | 0.85 | A | 100 |
| | 3 | B | A | A | A | A | 0.85 | 0.82 | A | 600 |
| | 4 | C | A | A | A | A | 0.9 | 0.86 | A | 600 |
| | 5 | D | A | A | A | A | 2.6 | 2.3 | A | 600 |
| | 6 | E | A | A | A | A | 4.8 | 4 | A | 600 |
| | 7 | B | A | A | A | A | 2.4 | 2.4 | A | 600 |
| | 8 | B | A | A | A | A | 2.5 | 2.1 | A | 600 |
| | 9 | F | B | B | A | A | 0.8 | 0.86 | A | 600 |
| | 10 | G | A | A | A | A | 0.8 | 0.9 | A | 600 |
| | 11 | H | A | A | A | A | 0.8 | 0.8 | A | 600 |
| | 12 | I | A | A | A | A | 0.9 | 0.7 | A | 600 |
| Comparative Examples | 1 | J | B | C | A | C | 0.8 | 0.5 | A | 100 |
| | 2 | J | B | C | A | C | 0.8 | 0.7 | A | 600 |
| | 3 | K | B | C | A | C | 5.2 | 4.3 | A | 100 |
| | 4 | K | B | C | A | C | 5.2 | 4.8 | A | 600 |
| | 5 | L | C | C | A | C | 0.8 | 0.6 | A | 600 |
| | 6 | M | A | A | A | B | 0.8 | 0.8 | A | 600 |
| | 7 | N | A | A | A | C | 0.8 | 0.8 | A | 600 |
| | 8 | O | A | A | A | B | 0.9 | 0.8 | A | 600 |
| | 9 | P | B | B | A | B | 0.9 | 0.8 | A | 600 |
| | 10 | Q | B | B | A | A | 76 | 76 | c | 600 |
| | 11 | R | A | C | A | B | 7.2 | 6.1 | A | 600 |

From the results in Table 2, it was found that the multilayer structures of Examples 1 to 12 according to the present invention had excellent interlayer adhesion even when the sterilization treatment was performed under a high pressure of 100 MPa or more. In addition, it has been found that the package using the multilayer structure has low delamination property and can maintain the freshness of food even when the sterilization treatment is performed under a high pressure of 100 MPa or more.

Although the present invention has been described in detail with reference to a specific embodiment, it will be apparent to those skilled in the art that various changes and modifications can be made without departing from the spirit and the scope of the present invention. The present application is based on Japanese Patent Application No. 2019-059254 filed on March 26, 2019, the contents of which are incorporated herein by reference.

### REFERENCE SIGNS LIST

- 1: Heat sealing resin layer
- 2: Adhesive resin layer
- 3: EVOH Layer
- 5: Stand-up pouch
- 6: Body sheet
- 7: Bottom sheet
- 8: Bottom seal portion
- 9: Side seal portion
- 10: Multilayer structure

## Claims

1. A multilayer structure used in a treatment under a high pressure of 100MPa or more, the multilayer structure comprising:
an ethylene-vinyl alcohol-based copolymer layer;
a heat sealing resin layer; and
an adhesive resin layer, wherein
the ethylene-vinyl alcohol-based copolymer layer contains a sodium ion, and
a content of the sodium ion in the ethylene-vinyl alcohol-based copolymer layer is 10 ppm to 500 ppm.

2. The multilayer structure according to claim 1, wherein the multilayer structure has a thickness of 20 µm to 1000 µm.

3. A package comprising the multilayer structure according to claim 1 or 2.
